# EUROPÄISCHE PATENTSCHRIFT

(11) **EP 0 923 427 B1**
(45) Veröffentlichungstag und Bekanntmachung des Hinweises auf die Patenterteilung: **29.01.2003**
(21) Anmeldenummer: 97942845.5
(22) Anmeldetag: 04.08.1997
(51) Int. Cl.: B23Q 1/00, B25B 11/00

(54) **BEARBEITUNGSMASCHINE**
PROCESSING MACHINE
MACHINE D'USINAGE

(30) Priorität: 05.08.1996 DE 19631630
(43) Veröffentlichungstag der Anmeldung: 23.06.1999
(73) Patentinhaber: HOMAG MASCHINENBAU AG, D-72296 Schopfloch (DE)
(72) Erfinder: GAUSS, Achim, D-75323 Bad Wildbad (DE); KALMBACH, Kurt, D-72293 Glatten (DE)
(74) Vertreter: HOFFMANN - EITLE
(86) Internationale Anmeldenummer: EP9704240
(87) Internationale Veröffentlichungsnummer: WO98005468

(56) Entgegenhaltungen:
- EP-A- 0 307 645
- EP-A- 0 687 521
- WO-A-95/23047
- DE-A- 3 826 830
- DE-A- 3 906 300
- DE-C- 4 404 413
- DE-U- 9 419 700
- US-A- 5 135 120
- "PANEL FLATTENER" IBM TECHNICAL DISCLOSURE BULLETIN, Bd. 34, Nr. 7A, 1.Dezember 1991, Seiten 421-422, XP000255660

## Beschreibung

Die Erfindung betrifft eine Bearbeitungsmaschine nach dem Oberbegriff des Patentanspruchs 1.

Derartige Bearbeitungsmaschinen werden als Bearbeitungszentren bezeichnet und dienen der Bearbeitung insbesondere plattenförmiger Werkstücke aus Holz, Holzwerkstoffen, Kunststoffwerkstoff oder dergleichen. Ein solches Bearbeitungszentrum weist zumindest einen, häufig aber zwei oder mehr Bearbeitungsplätze auf. Eine Bearbeitungseinheit ist über den Bearbeitungsplätzen in drei zueinander senkrecht stehenden Achsen, also einer X-Achse, Y-Achse und Z-Achse verfahrbar. Die Bearbeitungseinheit umfaßt zumindest eine Spindeleinheit zur Aufnahme von Bearbeitungswerkzeugen, Bearbeitungsaggregaten, Handhabungsaggregaten oder dergleichen. Mit derartigen Bearbeitungszentren wird eine Vielzahl aufeinanderfolgender Bearbeitungsschritte, beispielsweise Bohr-, Fräs-, Meßvorgänge und dergleichen, an Werkstücken aus Holz-, Kunststoff-, Schicht- oder Verbundwerkstoffen durchgeführt.

Um die jeweils zu bearbeitenden Werkstücke am Bearbeitungsplatz einzuspannen, ist das Bearbeitungszentrum mit einer Saugspanneinrichtung ausgestattet, auf der die Werkstücke während ihrer Bearbeitung mittels einer Vakuumansaugung fest aufgespannt werden können. Eine solche Saugspanneinrichtung umfaßt eine Anzahl von Saugköpfen, die in der Ebene der Bearbeitungsplätze liegen und zur Aufspannung der Werkstücke eingerichtet sind. Ferner umfaßt die Saugspanneinrichtung Tragschienen, auf denen die Saugköpfe in der Ebene der Bearbeitungsplätze angeordnet sind. In der Regel sind die Tragschienen in Querrichtung zu ihren Längsachsen verschiebbar. Aus der DE 44 04 413 C1 ist eine solche Vakuumspannvorrichtung bekannt. In der Beschreibung sind die Saugköpfe als quer zur Längsachse der zugehörigen Tragschiene abhebbar dargestellt. Wie dieses Abheben und Aufbringen der Saugköpfe erfolgen soll, ist allerdings nicht näher erläutert.

Bisher werden die Saugköpfe durch Verschieben der Tragschienen und/oder Verschieben der daran angeordneten Saugköpfe in Richtung der Tragschienenlängsachse in einem Feld in unterschiedlichen Konfigurationen positioniert, so, wie es jeweils für die Aufspannung eines gerade zu bearbeitenden Werkstücks am zweckmäßigsten ist.

Für das Einrichten der Saugköpfe in eine neue gewünschte Anordnung sind mehrere Vorgehensweisen bekannt. Zunächst können die Saugköpfe und die zugehörigen Tragschienen natürlich manuell eingerichtet werden, was jedoch mit einer entsprechenden Umrüstzeit verbunden ist. Deshalb wurden automatische Positionierverfahren entwickelt, mit denen nicht nur Einrichtzeiten für die Saugköpfe verringert werden können, sondern auch die Positioniergenauigkeit erhöht werden kann. So besteht eine Möglichkeit darin, die Saugköpfe und die zugehörigen Tragschienen mittels der Spindeleinheit, also der Bearbeitungseinheit des Bearbeitungszentrums zu verschieben und so neu zu positionieren. Dabei greift die Spindeleinheit beispielsweise mittels eines Stifts in eine entsprechende Öffnung des zu positionierenden Saugkopfes ein und verfährt dann den Saugkopf in die gewünschte Position. Nachteilig bei dieser Vorgehensweise ist jedoch, daß die Bearbeitungseinheit des Bearbeitungszentrums während dieses Einrichtvorgangs für die Werkstückbearbeitung blockiert ist, das heißt, die Bearbeitungseinheit muß während der Positionierung der Saugköpfe die Werkstückbearbeitung unterbrechen.

Damit die Neupositionierung der Saugköpfe gleichzeitig mit der Werkstückbearbeitung vorgenommen werden kann, wurde eine Lösung entwickelt, bei der zusätzlich zur verfahrbaren Bearbeitungseinheit am Bearbeitungszentrum ein separater, unabhängig verfahrbarer Ausleger vorgesehen ist, der für die Saugkopfpositionierung zuständig ist. Ein solches Bearbeitungszentrum ist beispielsweise im deutschen Gebrauchsmuster DE 94 19 700.8 U1 beschrieben. Der separate Ausleger ist beispielsweise in X-Richtung des Maschinenbettes verfahrbar und trägt eine Mitnehmereinrichtung, die am Ausleger in Y-Richtung verfahrbar ist. Die Mitnehmereinrichtung kann dann in Z-Richtung über einen Stift in eine entsprechende Öffnung im jeweiligen Saugkopf eingreifen und den Saugkopf in eine gewünschte Position verschieben. So kann bei einem Bearbeitungszentrum mit mehreren Bearbeitungsplätzen die Bearbeitungseinheit ein Werkstück bearbeiten, während gleichzeitig der separate Ausleger einen anderen Bearbeitungsplatz für die Aufspannung eines neuen Werkstücks vorbereitet.

Bei den geschilderten Bearbeitungszentren müssen diejenigen Saugköpfe, die gerade nicht benötigt werden, entweder in eine Warteposition verschoben werden oder aber von Hand entlang der Tragschienenlängsachse von den Schienenenden abgezogen werden. Falls später wieder mehr Saugköpfe benötigt werden, müssen diese gegebenenfalls wieder von Hand auf die Schienen aufgefädelt werden.

Der Erfindung liegt daher das technische Problem zugrunde, eine Bearbeitungsmaschine zu schaffen, bei der die Saugspanneinrichtung besser an eine unterschiedliche Anzahl jeweils erforderlicher Saugköpfe angepaßt werden kann.

Dieses technische Problem wird erfindungsgemäß von einer Bearbeitungsmaschine mit den Merkmalen des Patentanspruchs 1 gelöst.

Bei der erfindungsgemäßen Lösung sind die Saugköpfe an der jeweiligen Tragschiene derart lösbar angekoppelt, daß sie quer zur Tragschienenlängsachse abhebbar sind. Ferner ist erfindungsgemäß ein Saugkopfspeichermagazin vorgesehen, in dem die gerade nicht benötigten Saugköpfe ablegbar sind und aus dem die Saugköpfe bei Bedarf wieder zum Einsatz entnehmbar sind. Unter dem Begriff "Saugkopf" wird erfindungsgemäß nicht nur ein Vakuum-Saugkopf verstanden, der ein Werkstück ansaugt, sondern auch ein Aufspannkopf, der mit Druckluft betätigt wird und ein Werkstück zwischen zwei Klemmelementen, also z.B. zwei Klemmbacken, einspannt.

Schließlich ist zumindest eine Handhabungseinrichtung an der Bearbeitungsmaschine vorgesehen, um die Saugköpfe von einer Position in eine andere umzusetzen. Diese Handhabungseinrichtungen können also die Saugköpfe von einer Position auf der Tragschiene an eine andere Position auf der gleichen Tragschiene oder eine andere Position auf einer anderen Tragschiene umsetzen. Weiterhin kann die Handhabungseinrichtung Saugköpfe von den Tragschienen abnehmen und in das Saugkopfspeichermagazin ablegen und umgekehrt vom Saugkopfspeichermagazin aufnehmen und auf die Tragschienen aufsetzen.

Die Handhabungseinrichtung ist in eine Hauptspindel der Bearbeitungseinheit einwechselbar oder zusätzlich zur Hauptspindel an der verfahrbaren Bearbeitungseinheit angeordnet. Anstelle eines Bearbeitungswerkzeugs oder Bearbeitungsaggregats für das zu bearbeitende Werkstück wird also bei der ersten Lösung eine Handhabungseinrichtung in die Hauptspindel eingewechselt, die dann für die Handhabung der Saugköpfe mit der Bearbeitungseinheit verfahrbar ist. In einer anderen Ausführung ist parallel zu einer Hauptspindel der Bearbeitungseinheit eine eigene Handhabungseinrichtung an der verfahrbaren Bearbeitungseinheit angeordnet. Eine derartige Handhabungseinrichtung kann also analog zur Hauptspindel mit der Bearbeitungseinheit verfahren werden. Eine solche Handhabungseinrichtung kann also beispielsweise anstelle einer zweiten Hauptspindel angebracht sein. In der anderen Ausführungsform ist zumindest eine separate, verfahrbare Handhabungseinrichtung vorgesehen, um die Saugköpfe unabhängig von der Bearbeitungseinheit handhaben und umsetzen zu können. Bei dieser letztgenannten Lösung kann ein Bearbeitungsplatz der Bearbeitungsmaschine umgerüstet werden, während die Bearbeitungseinheit gleichzeitig ein auf einem anderen Bearbeitungsplatz aufgespanntes Werkstück bearbeitet. Eine solche separate Handhabungseinrichtung kann beispielsweise in Form eines verfahrbaren Auslegers oder einer verfahrbaren Portalanordnung ausgeführt sein. Die anderen Ausgestaltungen einer Handhabungseinrichtung, die mit der Bearbeitungseinheit verknüpft sind, können beispielsweise dann zweckmäßig sein, wenn nur ein Bearbeitungsplatz an der Bearbeitungsmaschine vorhanden ist und die Umrüstung möglicherweise sogar während der Werkstückabführung und - zuführung erfolgen kann.

Der Erfindung liegt also der Gedanke zugrunde, die Saugköpfe direkt an einer bestimmten Position an die zugehörige Tragschiene aufzusetzen und direkt von der zugehörigen Tragschiene abzunehmen. Erfindungsgemäß können also zusätzliche Saugköpfe gezielt an einer gewünschten Position auf eine Tragschiene aufgesetzt werden. Ferner können Saugköpfe, die sich bereits an einer Tragschienenposition befinden, gezielt an eine andere Position der gleichen Tragschiene oder einer anderen Tragschiene umgesetzt werden. Schließlich können auf den Tragschienen befindliche Saugköpfe gezielt abgenommen und im Speichermagazin abgelegt werden. Auf diese Weise kann also bei der Umrüstung des Bearbeitungsplatzes für die Bearbeitung eines anderen Werkstücks die Anordnung von Saugköpfen, die für die Aufspannung des zuvor bearbeiteten Werkstücks eingerichtet war, schnell und direkt in eine andere Saugkopfanordnung überführt werden, wie sie für die Bearbeitung des nächsten Werkstücks benötigt wird. Dabei kann bei jedem Umrüstvorgang problemlos die Anzahl und Art der Saugköpfe entsprechend angepaßt und verändert werden.

Durch die Erfindung ergibt sich also der Vorteil, daß stets nur genau diejenigen Saugköpfe in den gewünschten Positionen auf den Tragschienen angeordnet sind, die gerade für die Bearbeitung des nächsten Werkstücks benötigt werden. Der Umrüstvorgang von einer Saugkopfanordnung in eine andere Saugkopfanordnung erfolgt dabei schnell und direkt. Es ist dabei nicht erforderlich, Saugköpfe auf aufwendige Weise von einer Tragschienenführung "abzufädeln", wenn gerade weniger Saugköpfe für die Saugspanneinrichtung benötigt werden, oder umgekehrt, zusätzliche Saugköpfe auf eine Schienenführung "aufzufädeln", wenn gerade zusätzliche Saugköpfe in der Saugspanneinrichtung benötigt werden. Um ein solches ständiges Aufschieben bzw. Abziehen von Saugköpfen auf die Tragschiene bzw. von der Tragschiene, das von Hand vorgenommen wird, zu umgehen, ist bisher stets eine gewisse größere Anzahl von Saugköpfen in der Saugspanneinrichtung belassen worden, wobei gerade nicht benötigte Saugköpfe an den Tragschienen in eine Warteposition verschoben worden sind. Dadurch sind aber diejenigen Saugköpfe, die sich in einer Warteposition befinden, während der Bearbeitung des aufgespannten Werkstücks ständig einer Verschmutzung durch die bei der Bearbeitung anfallenden Späne, Abfälle, Kühlmittel etc. ausgesetzt. Dabei wird also die Auflagefläche der Saugköpfe verschmutzt und es kann zu Beeinträchtigungen der Vakuumansaugung des Werkstücks kommen. Dieses Problem der Verschmutzung tritt bei der erfindungsgemäßen Lösung nicht mehr auf, da sich keine überflüssigen Saugköpfe in Wartepositionen befinden, sondern diese Saugköpfe im Saugkopfspeichermagazin abgelegt sind. Es sind also nur diejenigen Saugköpfe auf den Schienen positioniert, auf die das Werkstück tatsächlich aufgespannt wird.

Weiterhin besteht durch die bisherig in Wartepositionen abgestellten, überflüssigen Saugköpfe in Wartepositionen stets eine Kollisionsgefahr während der Bearbeitung des Werkstücks, da die nicht benötigten Saugköpfe auf dem Aufspanntisch verbleiben. Bei der erfindungsgemäßen Lösung ist nun diese Kollisionsgefahr vollständig beseitigt, da alle überflüssigen Saugköpfe vom Aufspanntisch abgehoben und im Saugkopfspeichermagazin abgelegt werden. Somit ergibt sich der Vorteil, daß auch die Programmierung der Werkstückbearbeitung vereinfacht wird, da keine Kollisionskorridore für Saugköpfe berücksichtigt werden müssen, die sich in Wartepositionen befinden.

Bei der erfindungsgemäßen Lösung werden die Saugköpfe vollkommen abhebbar und damit schlauchlos an die Tragschienen angekoppelt. Das heißt, bei der erfindungsgemäßen Lösung entfallen Schleppschläuche und Schleppkabel, wie sie bisher zur Versorgung der schienengeführten Saugköpfe vorgesehen sind. Diese Vielzahl von Schleppschläuchen und -kabeln, die bisher jedem einzelnen Saugkopf auf den Tragschienen zugeführt werden, bringt eine ständige Kollisionsgefahr während der Bearbeitung des Werkstücks mit sich. Zudem sind die Versorgungsschläuche und -kabel der Saugköpfe anfällig für Beschädigungen. Bei der erfindungsgemäßen Lösung ist nun eine schlauchlose bzw. kabellose Versorgung der aufgesetzten Saugköpfe über die Tragschiene selbst vorgesehen. Durch das Wegfallen von Versorgungsschläuchen und -kabeln wird erfindungsgemäß die Gefahr von Beschädigungen dieser Versorgungsstränge und auch die Kollisionsgefahr vermieden. Zudem wird die Programmierung des Bearbeitungsvorgangs durch das Wegfallen entsprechender zu berücksichtigender Kollisionskorridore wesentlich vereinfacht.

Da erfindungsgemäß die Versorgungsschläuche und -kabel wegfallen, können sich diese Versorgungsstränge auch nicht, wie bisher, gegenseitig "ins Gehege kommen", d.h. gegenseitig behindern. Die Plazierung der Saugköpfe kann nun unabhängig von dem Problem der Zuführung der Versorgungsstränge vorgenommen werden, d.h. die Saugköpfe können direkt durch Aufsetzen an jede, noch nicht von einem anderen Saugkopf besetzte Tragschienenposition plaziert werden. Die Saugköpfe können also beliebig nahe nebeneinander positioniert werden, ohne, wie bisher, auf die zugehörigen Versorgungsstränge Rücksicht nehmen zu müssen. Dadurch wird auch die Programmierung der Saugkopfpositionierung stark vereinfacht, da die Saugköpfe erfindungsgemäß beliebig positioniert werden können.

Durch das erfindungsgemäße direkte Aufsetzen und Abheben von Saugköpfen können problemlos Saugköpfe eines bestimmten Typs durch Saugköpfe eines anderen Typs ausgetauscht werden. Es können also für jede neue Umrüstung der Saugspanneinrichtung nach Bedarf schnell und direkt unterschiedlich gestaltete Sauger aus dem Saugkopfspeichermagazin eingewechselt werden. So können gleichzeitig Saugköpfe beliebiger Geometrie, beispielsweise mit quadratischen, rechteckigen, runden, dreieckigen oder anderen Grundrissen eingesetzt werden. Bisher müssen dafür die schienengeführten Saugköpfe stets mit entsprechendem Arbeits- und Zeitaufwand von den Tragschienen abgezogen und durch andere, neu aufgeschobene Saugköpfe ersetzt werden.

Die erfindungsgemäße Bearbeitungsmaschine erlaubt also ein automatisches, schnelles und direktes Umrüsten der Saugspanneinrichtung auf die gerade benötigte Anzahl und Art von Saugköpfen. Zudem ist erfindungsgemäß eine allseitig umgreifende, kollisionsfreie Bearbeitung des Werkstücks möglich, da keine Saugköpfe in Wartepositionen und keine Versorgungsschläuche und -kabel der Saugköpfe zu berücksichtigen sind. Folglich wird bei der erfindungsgemäßen Bearbeitungsmaschine die Programmierung des Bearbeitungsvorgangs wesentlich vereinfacht. Ferner läßt sich erfindungsgemäß eine größere Anzahl von Saugköpfen je Tragschiene anordnen, da keine Versorgungsschläuche und -kabel zu berücksichtigen sind. Somit wird auch die Programmierung der Saugkopfpositionierung wesentlich vereinfacht.

Bei der erfindungsgemäßen Bearbeitungsmaschine können die Tragschienen sowohl in einer Längsrichtung der Maschine, als auch in einer Querrichtung der Maschine angeordnet sein. Eine Tragschienenanordnung in Längsausrichtung der Bearbeitungsmaschine kann vorteilhaft in bezug auf eine gleichzeitig vorgesehene Fördereinrichtung für die Werkstücke sein.

In einer bevorzugten Ausführungsform der erfindungsgemäßen Bearbeitungsmaschine sind die Saugköpfe auf der Oberseite der Tragschienen in Richtung senkrecht zur Ebene der Bearbeitungsplätze ankoppelbar. Die Saugköpfe werden also in Richtung senkrecht zur Ebene der Bearbeitungsplätze auf die Oberseite der jeweiligen Tragschiene aufgesetzt oder von dort abgehoben. Je nach Art der konkreten Ausgestaltung der Kopplungsverbindung zwischen Saugkopf und Tragschiene ist es erfindungsgemäß natürlich auch möglich, die Saugköpfe in einer anderen Richtung quer zur Tragschienenlängsachse abzuheben, z.B. in einer seitlichen Richtung bezüglich der Tragschienenlängsachse.

Erfindungsgemäß können die Saugköpfe auf verschiedene Weise abhebbar an der Tragschiene angekoppelt sein. In einer bevorzugten Ausführungsform sind die Saugköpfe für eine Vakuumansaugung an die zugehörige Tragschiene eingerichtet. Die Saugköpfe sind also als Doppelvakuumsauger ausgebildet, die sich einerseits an ihrer gewünschten Position mit ihren Auflageabschnitten durch Ausbildung eines Vakuums an die zugehörige Tragschiene ansaugen und sich somit in dieser Position fixieren und die andererseits an ihrer Aufspannfläche für das Werkstück dieses unter Ausbildung eines Vakuums ansaugen und am Saugkopf fixieren. Bei der Vakuumansaugung des Saugkopfes an die Tragschiene muß also die Tragschiene lediglich so gestaltet sein, daß der Saugkopf gut aufgesetzt werden kann, um anschließend durch ein Vakuum fixiert zu werden. Alternativ kann der Saugkopf an der zugehörigen Tragschiene aber auch auf irgendeine andere Weise fixiert werden, die ein Abheben erlaubt. Die Fixierung kann beispielsweise mechanisch durch Auf- bzw. Einschnappen, Auf- bzw. Einrasten, Auf- bzw. Einstecken etc. erfolgen.

Da die Saugköpfe erfindungsgemäß direkt auf die Tragschiene aufgesetzt bzw. an die Tragschiene angesetzt und von dort abgehoben werden, ist es nicht erforderlich, daß die Tragschienen eine Führung aufweisen, die ein Verschieben der Saugköpfe in Richtung der Tragschienenlängsachse erlaubt. Die Tragschienen können also als Konsolen ausgebildet sein, die lediglich ein Aufsetzen der Saugköpfe ermöglichen. Natürlich ist es aber auch möglich, die Tragschienen so zu gestalten, daß sie eine Führung aufweisen, die ein Verschieben der Saugköpfe entlang der Tragschiene ermöglicht.

In einer zweckmäßigen Ausführung der Erfindung sind die Tragschienen mit Versorgungsschnittstellen zur Versorgung der angekoppelten Saugköpfe mit Vakuum, Druckluft und/oder Fluiden versehen. Die Versorgungsschnittstellen sind dabei entlang der Tragschienen-Längserstreckung vorgesehen. So werden die aufgesetzten Saugköpfe an jeder beliebigen Position auf der Tragschiene mit Vakuum und Druckluft versorgt, um beispielsweise im Falle von Doppelvakuumsaugern die Saugköpfe selbst sowie die aufzuspannenden Werkstücke festzusaugen bzw. zu lösen. Bei Bedarf können über diese Versorgungsschnittstellen auch andere Funktionen des Saugkopfes gesteuert werden. Beispielsweise können auch Flüssigkeiten übertragen werden.

Zusätzlich können erfindungsgemäß weitere Versorgungsschnittstellen zur Versorgung der angekoppelten Saugköpfe mit elektrischer Antriebsenergie und/oder elektrischer Steuerenergie vorgesehen sein. Auch diese Versorgungsschnittstellen sind entlang der Längserstreckung der Tragschiene vorgesehen. Auf diese Weise können also die an die Tragschiene angekoppelte Saugköpfe Energien und Signale an der Tragschiene abgreifen.

Die Versorgungsschnittstellen können auf der Oberseite der Tragschiene, seitlich an der Tragschiene und/oder an der Unterseite der Tragschiene vorgesehen sein, je nach der gewünschten Ankopplungsart der Saugköpfe.

Falls erforderlich, können die Saugköpfe auch mit automatisch betätigbaren Kopplungselementen ausgestattet sein, die in und außer Eingriff mit den Versorgungsschnittstellen der zugehörigen Tragschiene bringbar sind.

Ferner können die Saugköpfe bei Bedarf auch mit einem eigenen Antrieb, z.B. in Form eines Elektromotors, ausgestattet sein, um die Saugköpfe entlang der Tragschienen zu verschieben, falls die Tragschienen mit einer Schienenführung versehen sind.

In einer zweckmäßigen Ausgestaltung umfaßt eine Handhabungseinrichtung, wie sie zuvor erläutert wurde, eine Greifereinheit, um die Saugköpfe aufnehmen und umsetzen zu können.

Die Saugkopfspeichermagazine können auf verschiedene geeignete Weise ausgestaltet sein, z.B. in Form eines Feldes mit einer Anzahl von einzelnen Speicherplätzen.

Nachfolgend wird die Erfindung anhand eines bevorzugten Ausführungsbeispiels mit Bezug auf die beigefügten Zeichnungen näher erläutert. Es zeigen:
- Fig. 1: eine schematische Draufsicht eines Ausführungsbeispiels eines Bearbeitungszentrums gemäß der Erfindung;
- Fig. 2: eine schematische Vertikalschnittansicht eines Saugkopfes und einer Tragschiene gemäß der Erfindung im angekoppelten Zustand;
- Fig. 3: eine schematische Vertikalschnittansicht des Saugkopfes und der Tragschiene von Fig. 2 im entkoppelten Zustand; und
- Fig. 4: eine schematische Seitenansicht des Bearbeitungszentrums von Fig. 1.

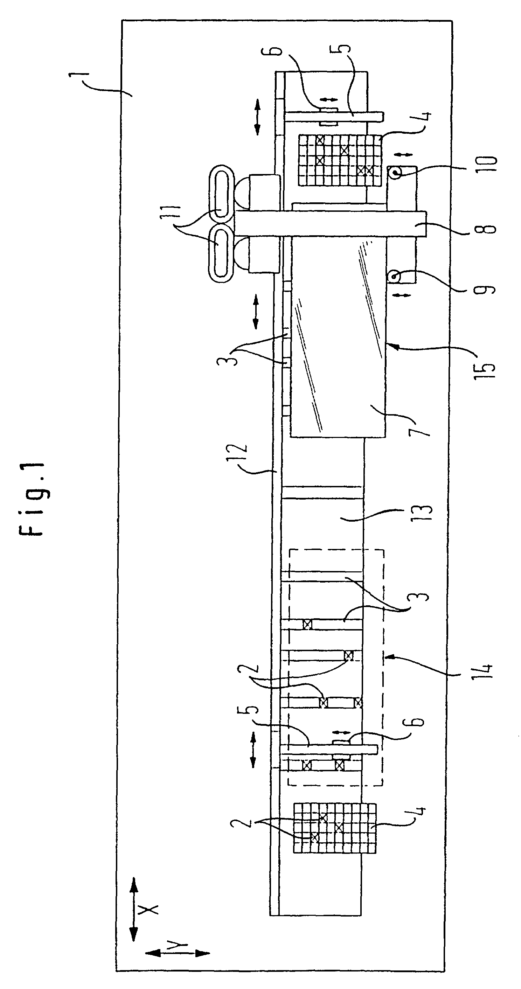

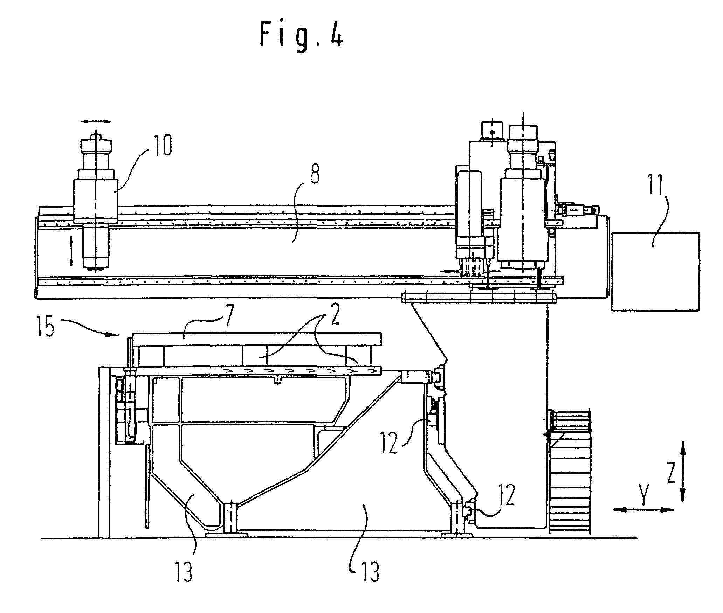

Fig. 1 und Fig. 4 zeigen in vereinfachter Darstellung ein Bearbeitungszentrum 1, mit dem beispielsweise plattenförmige Holzwerkstücke bearbeitet werden können. Auf einem Maschinenrahmen 13 des Bearbeitungszentrums 1 sind zwei Bearbeitungsplätze 14 und 15 eingerichtet. Auf dem Bearbeitungsplatz 15 ist ein plattenförmiges Werkstück 7 aufgespannt, das gerade bearbeitet wird. Auf dem anderen Bearbeitungsplatz 14 ist gerade kein Werkstück aufgespannt, so daß dort die Saugspanneinrichtung zum Aufspannen eines Werkstückes gut sichtbar ist. Am Bearbeitungsplatz 14 sind die Umrisse eines aufzuspannenden Werkstücks mit gestrichelten Linien angedeutet.

Die Saugspanneinrichtung umfaßt eine Anzahl von Tragschienen 3 sowie eine Anzahl auf die Tragschienen aufgesetzter Saugköpfe 2. Neben den beiden Stirnseiten der Saugspanneinrichtung für die beiden Bearbeitungsplätze 14, 15 sind zwei Saugkopfspeichermagazine 4 angeordnet. Jedes Saugkopfspeichermagazin 4 verfügt über eine Anzahl von Speicherplätzen, in die Saugköpfe 2 abgelegt werden können.

Für jeden Bearbeitungsplatz 14, 15 ist eine eigene Handhabungseinrichtung 5 vorgesehen, die entlang einer Führung 12 in Richtung des Doppelpfeils verfahrbar ist, d.h. in der X-Achsenrichtung des Bearbeitungszentrums. Die Handhabungseinrichtung 5 umfaßt einen horizontalen Ausleger, der in Y-Achsenrichtung verläuft. Wie in Fig. 1 am linken Bearbeitungsplatz 14 ersichtlich ist, ragt der horizontale Ausleger der Handhabungseinrichtung 5 in Y-Achsenrichtung über den Bearbeitungsplatz 14 und, falls er in X-Achsenrichtung in Fig. 1 nach links verfahren wird, über das zugehörige Saugkopfspeichermagazin 4. Am horizontalen Ausleger der Handhabungseinrichtung 5 ist eine Greifereinheit 6 angeordnet, die entlang des Auslegers in Y-Achsenrichtung und zusätzlich in Z-Richtung verfahrbar ist. Durch Verfahren des horizontalen Auslegers der Handhabungseinrichtung 5 in X-Achsenrichtung und der Greifereinheit 6 am horizontalen Ausleger in Y-Achsenrichtung kann jede gewünschte Position über dem zugehörigen Bearbeitungsplatz 14, 15 oder dem zugehörigen Saugkopfspeichermagazin 4 angesteuert werden. Durch ein Verfahren der Greifereinheit 6 in Z-Achsenrichtung, also senkrecht zur X-Y-Ebene, kann die Greifereinheit in und außer Eingriff mit einem Saugkopf 2 gebracht werden und diesen abheben oder absetzen.

In der rechten Bildhälfte in Fig. 1 am Bearbeitungsplatz 15 ist die Bearbeitungseinheit dargestellt, mit der die Werkstücke bearbeitet werden. Die Bearbeitungseinheit umfaßt einen horizonalen Bearbeitungsausleger 8, der sich in Y-Achsenrichtung erstreckt und der entlang einer Führung 12 in X-Achsenrichtung verfahrbar ist. Im Beispiel sind am Bearbeitungsausleger 8 zwei Spindeleinheiten 9, 10 jeweils auf einer Seite des Auslegers angebracht. Jede Spindeleinheit 9, 10 ist unabhängig von der anderen Spindeleinheit entlang des horizontalen Bearbeitungsauslegers 8 in Y-Achsenrichtung verfahrbar. Ferner ist jede Spindeleinheit 9, 10 in Z-Achsenrichtung verfahrbar. Aus zugehörigen Speichermagazinen 11, in denen Bearbeitungswerkzeuge, Bearbeitungsaggregate, Handhabungsaggregate usw. bereitgehalten werden, werden die gerade benötigten Werkzeuge bzw. Aggregate in die Spindeleinheiten 9, 10 eingewechselt und es erfolgen die vorgesehenen Bearbeitungsschritte am Werkstück 7.

Während, wie in Fig. 1 in der rechten Bildhälfte gezeigt, die Bearbeitungseinheit gerade ein aufgespanntes Werkstück 7 bearbeitet, kann, wie in Fig. 1 in der linken Bildhälfte gezeigt, der andere Bearbeitungsplatz 14 für ein anderes, anschließend zu bearbeitendes Werkstück umgerüstet werden. Dabei wird die Saugspanneinrichtung des Bearbeitungsplatzes 14 für die Aufspannung des neuen Werkstücks vorbereitet. Für das neue aufzuspannende Werkstück wird eine bestimmte Anzahl an Saugköpfen 2 vorgegeben, die an vorgegebenen Positionen am Bearbeitungsplatz 14 angeordnet werden müssen, um das Werkstück in einer Weise aufzuspannen, die für die spätere Bearbeitung zweckmäßig ist. Die Tragschienen 3, die sich im Beispiel in Y-Richtung erstrecken, können dabei entlang dem Bearbeitungsplatz 14 in X-Achsenrichtung verfahren werden. Dafür ist ein entsprechender (nicht gezeigter) Antrieb zum Verfahren der einzelnen Tragschienen 3 vorgesehen. Weiterhin können die Saugköpfe 2, die auf die Tragschienen aufgesetzt sind, in Richtung der Tragschienenlängsachse, d.h. in Y-Achsenrichtung auf der zugehörigen Tragschiene 3 verfahren werden. Dafür sind die Saugköpfe 2 mit einem entsprechenden Antrieb ausgerüstet. So können also durch Verfahren der Tragschienen 3 und der Saugköpfe 2 die Saugköpfe 2 auf dem Bearbeitungsplatz 14 in der gewünschten Anordnung positioniert werden. So entsteht ein Feld von Saugköpfen 2, auf die dann das aufzuspannende Werkstück in einer vorgegebenen Ausrichtung abgelegt wird. Das auf den vorpositionierten Saugköpfen 2 abgelegte Werkstück wird dann durch Vakuumansaugung auf den Saugköpfen 2 fest aufgespannt.

Die Saugköpfe 2 sind von der zugehörigen Tragschiene 3 in Z-Achsenrichtung, d.h. senkrecht zur X-Y-Ebene, abhebbar. Um Saugköpfe 2, die für die Aufspannung des nächsten Werkstücks nicht benötigt werden, aus dem Saugerfeld zu entfernen, wird die Handhabungseinrichtung 5 mit der daran befindlichen Greifereinheit 6 über die Position des Saugkopfes 2 gefahren, der Saugkopf wird nach oben abgehoben, die Greifereinheit 6 wird über das Saugkopfspeichermagazin 4 gefahren und der Saugkopf 2 wird in einen freien Speicherplatz abgelegt. Falls für die Aufspannung des nächsten Werkstückes zusätzliche oder andere Saugköpfe benötigt werden, wird umgekehrt vorgegangen, d.h. der Saugkopf 2 wird aus dem Saugkopfspeichermagazin 4 entnommen und von der Greifereinheit 6 direkt an der gewünschten Endposition von oben her auf die Tragschiene 3 aufgesetzt. Wenn die Bearbeitungseinheit gerade ein Werkstück auf dem linken Bearbeitungsplatz 14 bearbeitet, kann gleichzeitig die in Fig. 1 rechte Handhabungseinrichtung den rechten Bearbeitungsplatz 15 für die Aufspannung eines neuen Werkstücks einrichten. Da sich die Bearbeitungseinheit 8, 9, 10 dann über dem Bearbeitungsplatz 14 befindet, hat die in Fig. 1 rechte Handhabungseinrichtung 5 freien Zugang zum Bearbeitungsplatz 15, um dort die Umrüstung vorzunehmen. So kann also immer abwechselnd auf dem einen Bearbeitungsplatz ein aufgespanntes Werkstück bearbeitet werden, während gleichzeitig der andere Bearbeitungsplatz für das Aufspannen eines neuen Werkstücks vorbereitet wird.

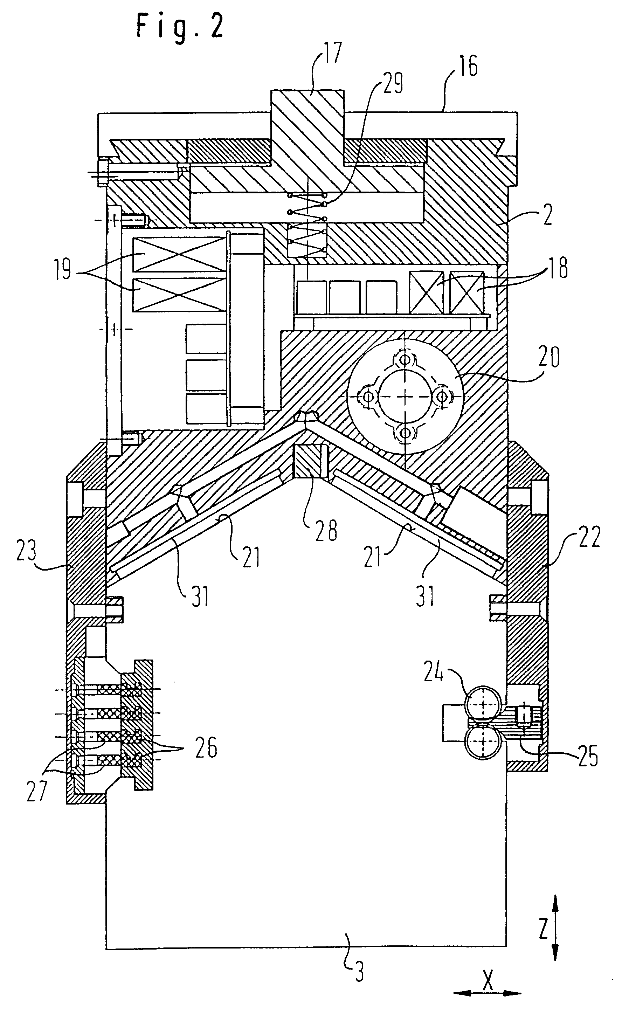

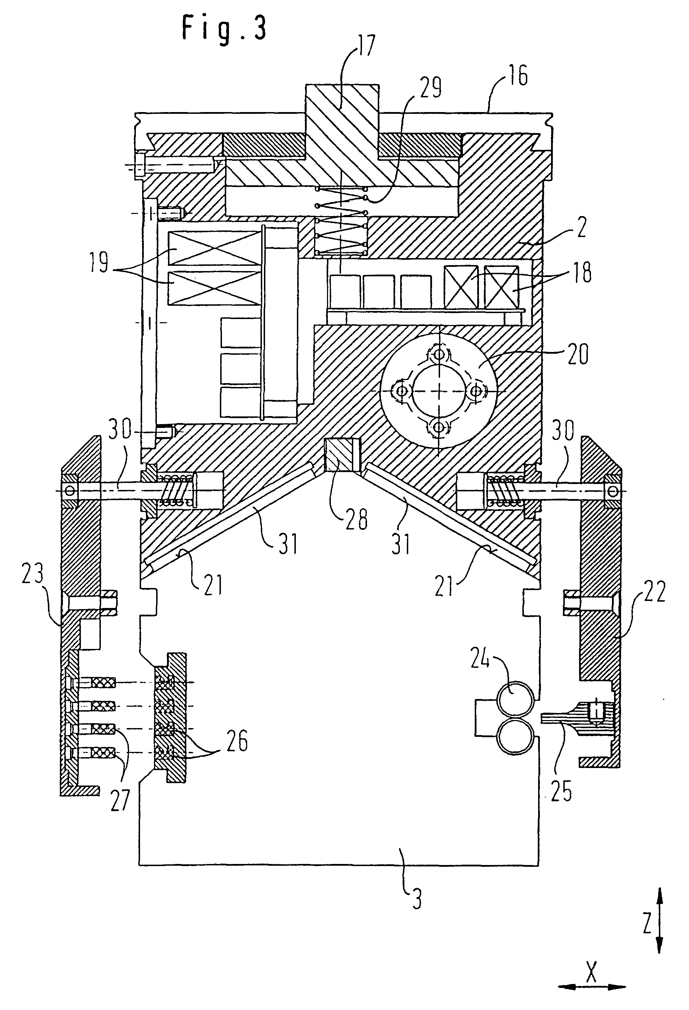

Die Fig. 2 und Fig. 3 zeigen nun in vereinfachter Darstellung eine konkrete Ausführung eines Saugkopfes 2 und einer zugehörigen Tragschiene 3. In Fig. 2 ist der angekoppelte Zustand des Saugkopfes 2 dargestellt, in dem der Saugkopf entlang der Tragschienenlängsachse verfahrbar ist und dann an einer gewünschten Position für die Aufspannung eines Werkstücks fixierbar ist. In Fig. 3 ist der Zustand dergestellt, in dem der Saugkopf 3 von den Versorgungsschnittstellen der Tragschiene 3 abgekoppelt ist und nach oben, d.h. in Z-Achsenrichtung, von der Tragschiene abhebbar ist.

Der Saugkopf 2 umfaßt einen quaderförmigen Grundkörper, der an seiner Unterseite mit einem Auflagebereich 31 zur Auflage auf der Tragschiene 3 versehen ist. Der Auflagebereich 31 besteht aus zwei im Winkel zueinander verlaufenden Hälften. Dazu passend ist die Tragschiene 3 auf ihrer Oberseite mit Auflageflächen 21 versehen, die im Winkel zueinander angeordnet sind. Im Auflagebereich 31 des Saugkopfes 2 sind Ausnehmungen vorgesehen, denen wahlweise Druckluft zugeführt oder zur Bildung eines Vakuums Luft entzogen werden kann.

Im Saugkopf 2 ist ein elektrischer Antriebsmotor 20 angeordnet, dessen (nicht gezeigtes) Ritzel in eine Zahnstange 28 eingreift, die auf der Oberseite der Tragschiene 3 entlang der Schienenlängsachse verläuft. Ferner ist der Saugkopf 2 mit verschiedenen Einheiten für die elektrische und elektronische Energie- und Signalsteuerung ausgestattet. Es sind beispielsweise Steuerungsprozessoren 18 und Leistungssteuerungseinheiten 19 vorgesehen. Lediglich schematisch angedeutet ist ein Tellerventil, das gegen die Kraft einer Feder 29 z.B. durch Auflegen eines Werkstücks betätigt werden kann. Im unteren Abschnitt des Saugkopfes 2 ist auf beiden Seiten der Tragschiene 3 jeweils ein Versorgungsbügel 22, 23 angeordnet. Im Versorgungsbügel 23 sind im Beispiel elektrische Schleifkontakte 27 angeordnet, die mit den im Saugkopf 2 befindlichen Steuerungs- und Antriebsmodulen verbunden sind. Im Versorgungsbügel 22 ist ein Zapfstutzen 25 angeordnet, der mit der Pneumatik des Saugkopfes 2 verbunden ist.

Auf seiten der Tragschiene 3 sind Schleifkontaktanschlüsse 26 vorgesehen, die zu den Schleifkontakten 27 im Versorgungsbügel 23 passen. Ferner ist auf seiten der Tragschiene 3 eine Aktivdichtung 24 vorgesehen, die zum Zapfstutzen 25 im Versorgungsbügel 22 paßt. Die Schleifkontaktanschlüsse 26 und die Aktivdichtung 24 sind linear ausgebildet und erstrecken sich entlang der Tragschienenlängsachse. Sie bilden somit eine lineare Schnittstelle zur Versorgung aller auf der Tragschiene angekoppelten Saugköpfe.

In dem in Fig. 2 gezeigten Zustand ist der Saugkopf 2 über seine Versorgungsbügel 22, 23 an die lineare Schnittstelle 24, 26 der Tragschiene 3 angekoppelt. Wenn ein Werkstück auf das Tellerventil 17 aufgelegt wird, aktiviert dieses die Vakuumansaugung, die dann zwischen einem Saugbelag 16 oben auf dem Saugkopf und dem darauf abgelegten Werkstück wirksam wird und das Werkstück sicher auf dem Saugkopf fixiert.

Wie in Fig. 3 veranschaulicht ist, können die Versorgungsbügel 22, 23 seitlich ausgefahren werden, wobei die Schleifkontakte 27 und der Zapfstutzen 25 aus der linearen Schnittstelle der Tragschiene 3 gelöst werden. Dazu werden federbelastete Bolzen 30 mit Hilfe von Druckluft seitlich nach außen ausgestellt. Gleichzeitig mit dem Ausstellen der Bolzen 30, an denen die Versorgungsbügel 22, 23 befestigt sind, wird auch Druckluft in den Auflagebereich 31 eingebracht, um die Vakuumfixierung des Saugkopfes auf der Tragschiene aufzuheben. So kann der Saugkopf 2 nun von der Handhabungseinrichtung 5 (siehe Fig. 1) von oben her von der Tragschiene 3 abgehoben werden. Durch eine umgekehrte Vorgehensweise kann ein Saugkopf 2 auf die Tragschiene 3 aufgesetzt werden und die Versorgungsbügel 22, 23 können dann über die Bolzen 30 wieder eingezogen werden, wodurch der aufgesetzte Saugkopf an die Versorgungsschnittstelle der Tragschiene angekoppelt wird.

## Patentansprüche

1. Bearbeitungsmaschine, mit
- einem oder mehreren, im wesentlichen in einer gemeinsamen Ebene liegenden Bearbeitungsplätzen (14, 15), insbesondere für plattenförmige Werkstücke aus Holz oder Holzwerkstoffen,
- mindestens einer in drei senkrecht zueinander stehenden Achsen (X-, Y- und Z-Achse) über den Bearbeitungsplätzen (14, 15) verfahrbaren Bearbeitungseinheit (9, 10), sowie
- einer Saugspanneinrichtung (2, 3), die eine Anzahl in der Ebene der Bearbeitungsplätze (14, 15) liegender, zur Aufspannung der Werkstücke (7) eingerichteter Saugköpfe (2) sowie Tragschienen (3) umfaßt, auf denen die Saugköpfe in der Ebene der Bearbeitungsplätze (14, 15) angeordnet sind,
**dadurch gekennzeichnet, daß**
- die Saugköpfe (2) an der jeweiligen Tragschiene (3) quer zu deren Längsachse abhebbar angekoppelt sind, ein Saugkopfspeichermagazin (4) vorgesehen ist, in dem die Saugköpfe (2) ablegbar und zum Einsatz entnehmbar sind, und
- zumindest eine separate verfahrbare Handhabungseinrichtung (5, 6) zum Umsetzen von Saugköpfen (2) auf den Tragschienen sowie von den Tragschienen (3) in das Saugkopfspeichermagazin (4) und umgekehrt vorhanden ist.

2. Bearbeitungsmaschine nach Anspruch 1
**dadurch gekennzeichnet, daß**
- die Handhabungseinrichtung in eine Hauptspindel (9, 10) der Bearbeitungseinheit einwechselbar ist oder zusätzlich zu einer Hauptspindel (9, 10) der Bearbeitungseinheit an der verfahrbaren Bearbeitungseinheit angeordnet ist.

3. Bearbeitungsmaschine nach Anspruch 1 oder 2,
**dadurch gekennzeichnet, daß**
die Saugköpfe (2) auf der Oberseite der Tragschienen (3) in Richtung senkrecht zur Ebene der Bearbeitungsplätze (14, 15) ankoppelbar sind.

4. Bearbeitungsmaschine nach Anspruch 1 oder 2,
**dadurch gekennzeichnet, daß**
die Saugköpfe (2) für eine Vakuumansaugung an die zugehörige Tragschiene (3) eingerichtet sind.

5. Bearbeitungsmaschine nach einem der Ansprüche 1 bis 4,
**dadurch gekennzeichnet, daß**
die Tragschienen (3) mit Versorgungsschnittstellen (24) zur Versorgung der angekoppelten Saugköpfe (2) mit Vakuum, Druckluft und/oder Fluiden versehen sind.

6. Bearbeitungsmaschine nach Anspruch 5,
**dadurch gekennzeichnet**, d a ß die Tragschienen (3) mit Versorgungsschnittstellen (26) zur Versorgung der angekoppelten Saugköpfe (2) mit elektrischer Antriebsenergie und/oder elektrischer Steuerenergie versehen sind.

7. Bearbeitungsmaschine nach Anspruch 5 oder 6,
**dadurch gekennzeichnet**, d a ß die Versorgungsschnittstellen (24, 26) entlang der Tragschienen-Längserstreckung vorgesehen sind.

8. Bearbeitungsmaschine nach Anspruch 1 oder 2,
**dadurch gekennzeichnet**, d a ß die Handhabungseinrichtung eine Greifereinheit umfaßt.

## Claims

1. Processing machine having
- one or more machining positions (14, 15) lying substantially in a common plane, in particular for sheet-form workpieces made of wood or wood materials,
- at least one machining unit (9, 10) movable over the machining positions (14, 15) along three axes (X-, Y-and Z-axis) standing perpendicular to one another, and
- a suction clamping device (2, 3) comprising a number of suction heads (2) set up to clamp the workpieces (7) and lying in the plane of the machining positions (14, 15) and support rails (3) on which the suction heads are arranged in the plane of the machining positions (14, 15),
**characterised in that**
- the suction heads (2) are attached to the support rail (3) so that they can be lifted off transverse to their longitudinal axis, a suction head storage magazine (4) is provided in which the suction heads (2) can be deposited and from which they are removable for use, and
- at least one separate movable handling device (5, 6) for transferring suction heads (2) on the support rails and from the support rails (3) into the suction head storage magazine (4) and vice versa is present.

2. Processing machine according to Claim 1, **characterised in that**
- the handling device is fitted interchangeably into a main spindle (9, 10) of the machining unit or is arranged on the movable machining unit in addition to a main spindle (9, 10) of the machining unit.

3. Processing machine according to Claim 1 or 2, **characterised in that** the suction heads (2) are attachable on the upper side of the support rails (3) in the direction perpendicular to the plane of the machining positions (14, 15).

4. Processing machine according to Claim 1 or 2, **characterised in that** the suction heads (2) are set up on the associated support rail (3) for vacuum suction.

5. Processing machine according to one of Claims 1 to 4, **characterised in that** the support rail (3) is provided with supply interfaces (24) for supplying the attached suction heads (2) with vacuum, compressed air and/or fluids.

6. Processing machine according to Claim 5, **characterised in that** the support rails (3) are provided with supply interfaces (26) for supplying the attached suction heads (2) with electric propulsion energy and/or electric control energy.

7. Processing machine according to Claim 5 or 6, **characterised in that** the supply interfaces (24, 26) are provided along the longitudinal extension of the support rail.

8. Processing machine according to Claim 1 or 2, **characterised in that** the handling device comprises a gripper unit.

## Revendications

1. Machine d'usinage avec :
- un ou plusieurs postes de travail (14, 15) se trouvant sensiblement dans le même plan, en particulier pour des pièces en forme de plaques en bois ou en un matériau dérivé du bois,
- au moins une unité d'usinage (9, 10) déplaçable suivant trois axes mutuellement perpendiculaires (axes X, Y et Z) au-dessus des postes d'usinage (14, 15), et
- une installation (2, 3) d'immobilisation par aspiration qui comporte un certain nombre de têtes d'aspiration (2) situées dans le plan des postes d'usinage et prévues pour immobiliser les pièces (7), ainsi que des rails de support (3) sur lesquels les têtes d'aspiration sont disposées dans le plan des postes d'usinage (14, 15),
**caractérisée en ce que** :
- les têtes d'aspiration (2) des différents rails de support (3) sont couplées avec ces rails de manière amovible perpendiculairement par rapport à leur axe longitudinal, **en ce qu'**une réserve (4) est prévue pour les têtes d'aspiration dans laquelle les têtes d'aspiration (2) peuvent être rangées et dont elles peuvent être sortie pour être utilisées,
- et **en ce qu'**au moins une installation de manipulation (5, 6) déplaçable séparée est prévue pour répartir les têtes d'aspiration (2) sur les rails de support et pour les retirer des rails (3) et les retourner dans la réserve (4) pour les têtes d'aspiration.

2. Machine d'usinage selon la revendication 1, **caractérisée en ce que** l'installation de manipulation peut être placée de manière amovible dans une broche principale (9, 10) de l'unité d'usinage ou qu'elle est présente en plus de la broche principale (9, 10) de l'unité d'usinage, sur l'unité d'usinage déplaçable.

3. Machine d'usinage selon la revendication 1 ou la revendication 2, **caractérisée en ce que** les têtes d'aspiration (2) peuvent être couplées avec le côté supérieur des rails de support (3) suivant une direction perpendiculaire au plan des postes d'usinage (14, 15).

4. Machine d'usinage selon la revendication 1 ou la revendication 2, **caractérisée en ce que** les têtes d'aspiration (2) destinées à être mises sous vide, sont installées sur les rails de support (3) correspondants.

5. Machine d'usinage selon l'une des revendications 1 à 4, **caractérisée en ce que** les rails de support (3) sont pourvus d'une interface d'alimentation (24), pour assurer une alimentation en vide, en pression d'air et / ou en fluide, des têtes d'aspiration (2) couplées.

6. Machine d'usinage selon la revendication 5, **caractérisée en ce que** les rails de support (3) sont pourvus d'une interface d'alimentation (26) pour assurer une alimentation en énergie électrique motrice et / ou en énergie électrique de commande, des têtes d'aspiration (2) couplées.

7. Machine d'usinage selon la revendication 5 ou la revendication 6, **caractérisée en ce que** les interfaces d'alimentation (24, 26) sont disposées suivant la direction longitudinale des rails de support.

8. Machine d'usinage selon la revendication 1 ou la revendication 2, **caractérisée en ce que** l'installation de manipulation comprend une unité de préhension.
